# EUROPEAN PATENT APPLICATION

(11) **EP 4 653 480 A1**
(43) Date of publication of application: **26.11.2025**
(21) Application number: 24883554.8
(22) Date of filing: 03.09.2024
(51) Int. Cl.: C08F 222/16, C08F 222/14, C08F 222/02, C11D 3/37, C11D 3/00

(54) **NEW BIO-BASED TERNARY POLYMER, AND PREPARATION METHOD THEREFOR AND USE THEREOF**

(30) Priority: 19.03.2024 CN 202410313306
(71) Applicant: All-Plus Chemical Co., Ltd., Nanjing, Jiangsu 210000 (CN)
(72) Inventor: OU, Min, Nanjing, Jiangsu 210000 (CN); MEI, Longyi, Nanjing, Jiangsu 210000 (CN); JIANG, Ying, Nanjing, Jiangsu 210000 (CN)
(74) Representative: Miller, Ronald Anthony
(86) International application number: PCT/CN2024/116458
(87) International publication number: WO 2025/194699

(57) **Abstract**

The present disclosure provides a novel bio-based terpolymer and a preparation method and use thereof. The novel bio-based terpolymer includes itaconic acid, monoethyl itaconate, and diethyl itaconate units. Through the above-mentioned monomers, the bio-based terpolymer with a medium molecular weight and excellent performance is synthesized under optimized synthetic conditions in the presence of substances such as a molecular modifier. Moreover, the bio-based terpolymer is used in dishwashing liquids, dishwasher pods, laundry powders, laundry liquids, etc. The terpolymer provided by the present disclosure has a remarkable effect in the resistance to hard water and the inhibition of various limescales. It is observed that a glass cup washed by a dishwashing powder prepared with the terpolymer of the present disclosure is transparent and bright, and does not have dirt, water stains, spots, or film marks.

## Description

### TECHNICAL FIELD

The present disclosure relates to the technical field of polymer synthesis, and specifically to a novel bio-based terpolymer and a preparation method and use thereof.

### BACKGROUND

A formula of a dishwasher detergent mainly includes the following ingredients: a washing aid, a non-ionic surfactant, an enzyme preparation, a polymeric dispersant, an oxidant, etc., which are listed from high to low in terms of their contents. The content of the washing aid in the dishwasher detergent can be as high as 30% to 60%. The washing aid mainly plays the following four roles: a chelation role (the washing aid can make calcium and magnesium ions in water chelated and dissolved, such that insoluble calcium and magnesium salts can be prevented from being precipitated to pollute the tableware), serving as an alkaline medium (an alkaline medium environment is conducive to the saponification of oils and fats and the emulsification, dispersion, and removal of grease stains), a synergistic role (the washing aid can play a synergistic role with a surfactant, which reduces the consumption of the surfactant and improves the cleaning performance and detergency of the dishwasher detergent), and a dispersion role (the washing aid can stabilize the suspension and dispersion of dirt particles in water). The content of a non-ionic surfactant in the dishwasher detergent is very low. A major function of the non-ionic surfactant is to wet the dirt, help the dispersion of dirt, and prevent the dirt from being re-deposited on the surface of tableware. A surfactant adopted in the dishwasher detergent must be a non-ionic surfactant with low foaming and oxidation resistance. This is because the foam included in a jet water stream of a dishwasher will greatly reduce the jet pressure and thus reduce the cleaning efficiency. The main function of the oxidant is to decompose the colored dirt to make the colored dirt removed and achieve a disinfection effect. Sodium hypochlorite, sodium perborate, sodium percarbonate, etc. can be adopted as the oxidant. The polymeric dispersant can make calcium and magnesium ions in water chelated and dissolved to prevent insoluble calcium and magnesium salts from being precipitated to pollute the tableware, which can reduce the consumption of a chelating agent. Generally, scale is mainly composed of calcium carbonate, calcium sulfate, calcium silicate, and calcium phosphate. Due to the inhibitory effects of dispersants on the crystal nucleation and growth and the cost-effective descaling, spot removal, and water stain removal characteristics of dispersants, dispersants have been widely used both industrially and at home. The existing dispersants include polymeric and non-polymeric dispersants. Because the functional groups of polymers have strong complexation and the macromolecules exhibit excellent dispersion characteristics, a low polymer concentration can also prevent the scaling.

In recent years, with the improvement of people's environmental awareness and the demand for eco-friendly chemicals, the research on the synthesis of phosphorus-free high-efficiency dispersants has important practical significance and direct economic benefits. Bio-based compounds with unique chemical functions can be prepared through the selective conversion of plants and other non-fossil biological raw materials, and are used to develop new polymers to replace the polymers produced from fossil carbon raw materials. A lot of efforts has been made to produce bio-based polymers that are identical to petrochemicals and can directly replace the petroleum. However, the long-term goal is to synthesize novel sustainable bio-based polymers that can functionally replace or exhibit better performance than the existing polymers. In many cases, precursors for bio-based polymers come from carbohydrates, and the common raw materials derived from biomasses include starches, soluble sugars, cell wall polysaccharides, cellulose, hemicellulose, pectin, and lignin as an aromatic polymer. Currently, many related grafted polymers on the market or materials produced by mixing the above-mentioned bio-based raw materials as matrices with petrochemical raw materials can be degraded, but the degradation of these materials basically depends on the bio-based raw materials as matrices, rather than the polymers themselves. Moreover, the raw material sources still depend on petrochemical raw materials. Therefore, there is still a need for improvements.

### SUMMARY

An objective of the present disclosure is as follows: Due to the inhibitory effects of dispersants on the crystal nucleation and growth, and the cost-effective descaling, spot removal, and water stain removal characteristics of dispersants, dispersants have been widely used both industrially and at home. A first technical problem to be solved by the present disclosure is to provide a novel bio-based terpolymer. Monomer sources for the bio-based terpolymer are 100% bio-based raw materials. The degradability of a synthetic product completely depends on the degradability of the polymer. A second technical problem to be solved by the present disclosure is to provide a design idea, a preparation method, and a use of the novel bio-based terpolymer. A third technical problem to be solved by the present disclosure is to provide a use of the novel bio-based terpolymer in a washing and care industry.

In order to achieve the above objective, the present disclosure provides the following technical solutions:
In a first aspect, the present disclosure provides a bio-based terpolymer with a structure as follows: 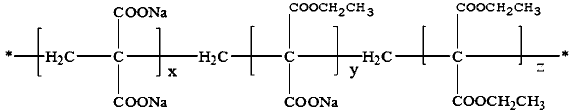 where x : y : z = (1-2):(1-6):(1-3); and the bio-based terpolymer has a molecular weight of 500 Da to 5,000 Da.

In a second aspect, the present disclosure provides a preparation method of a bio-based terpolymer, including:
S1, adding itaconic acid, monoethyl itaconate, and diethyl itaconate as synthetic raw materials, and a molecular modifier to water, and fully stirring for dissolution to produce a mixed solution;
S2, preparing an initiator solution;
S3, slowly adding the initiator solution dropwise to the mixed solution obtained in the S1, and allowing a reaction under heating to produce a polymer solution;
S4, precipitating and washing the polymer solution to produce a precipitation product; and
S5, drying the precipitation product to produce a powdered terpolymer of poly(sodium itaconate-monoethyl itaconate-diethyl itaconate).

Preferably, the itaconic acid, the monoethyl itaconate, and the diethyl itaconate as the synthetic raw materials are in a mass ratio of (1-2):(1-6):(1-3).

Preferably, the molecular modifier is one or two selected from a group consisting of sodium hypophosphite, isopropyl alcohol, and isopropyl mercaptan, and a mass of the molecular modifier is 2 wt% to 10 wt% of a total mass of the itaconic acid, the monoethyl itaconate, and the diethyl itaconate as the synthetic raw materials.

Preferably, an initiator of the initiator solution is one or two selected from a group consisting of ammonium persulfate and potassium persulfate, and a mass of the initiator is 1 wt% to 20 wt% of a total mass of the itaconic acid, the monoethyl itaconate, and the diethyl itaconate as the synthetic raw materials.

Preferably, the reaction is conducted in an inert atmosphere.

Preferably, in the S3, the reaction is conducted at 60°C to 100°C for 0.5 h to 6 h.

Preferably, in the S4, the precipitating is conducted as follows: adding absolute ethanol to the polymer solution, where a volume ratio of the absolute ethanol to the polymer solution is 1:6.

Preferably, in the S5, the drying is vacuum drying, and the vacuum drying is conducted at 80°C for 24 h.

In a third aspect, the present disclosure further provides a use of the bio-based terpolymer described above in preparation of a dishwasher detergent.

In a fourth aspect, the present disclosure further provides a dishwasher detergent including the bio-based terpolymer described above.

Compared with the prior art, the present disclosure has the following advantages: In the present disclosure, a novel bio-based terpolymer is synthesized through aqueous solution polymerization, and sources for the synthetic raw materials are 100% bio-based raw materials. The terpolymer synthesized has high hard water resistance and strong inhibition on a variety of limescales, and has been successfully used in a dishwashing powder formula. The terpolymer exhibits better performance than the commercially-available polyacrylic acid (PAA) polymers, and has obvious advantages in the cleaning of tableware by dishwashers. As an eco-friendly and 100% bio-based polymer, the terpolymer has a promising prospect in the dishwasher detergent market.

### BRIEF DESCRIPTION OF THE DRAWINGS

FIG. 1 shows an infrared spectrum of the bio-based terpolymer of the present disclosure;
FIG. 2 shows thermogravimetric analysis results of the bio-based terpolymer of the present disclosure;
FIG. 3 shows gel permeation chromatography results of the bio-based terpolymer of the present disclosure;
FIG. 4 shows a picture of water-solubility evaluation for the bio-based terpolymer of the present disclosure; and
FIG. 5 shows a washing effect of a dishwashing powder formula using the bio-based terpolymer of the present disclosure.

### DETAILED DESCRIPTION OF THE EMBODIMENTS

In view of the prior art, the present disclosure has independently developed a novel bio-based terpolymer. Monomer sources for the bio-based terpolymer are 100% bio-based raw materials. The degradability of a synthetic product completely depends on the degradability of the polymer. The novel bio-based terpolymer not only has a high technical value and advantages, but also exhibits a promising market prospect. More importantly, the bio-based terpolymer is completely independent of petrochemical raw materials, and has a very high social value.

In order to achieve the above objective, the present disclosure provides a synthesis method of a bio-based terpolymer.

In an exemplary example, the synthesis method of the bio-based terpolymer in the present disclosure includes the following steps:
(1) Under the protection of an inert gas, itaconic acid, monoethyl itaconate, diethyl itaconate, a molecular modifier, a pH-regulating agent, and water are mixed and fully stirred at room temperature to produce a mixed solution.
(2) An initiator solution is prepared and transferred to a constant-pressure dropping funnel.
(3) The mixed solution obtained in the step (1) is vacuumed and protected with an inert gas introduced.
(4) The initiator solution in the constant-pressure dropping funnel obtained in the step (2) is slowly added dropwise to the mixed solution treated in the step (3), and a high-temperature reaction is conducted to produce a polymer solution.
(5) The polymer solution is precipitated, and washed with absolute ethanol to produce a precipitation product.
(6) The precipitation product is dried in a vacuum drying oven to produce powdered poly(sodium itaconate-monoethyl itaconate-diethyl itaconate), namely, the terpolymer.

Further, in the step (1), the sodium itaconate, the monoethyl itaconate, and the diethyl itaconate are in a mass ratio of (1-2):(1-6):(1-3).

Further, in the step (1), the molecular modifier is one or two selected from a group consisting of sodium hypophosphite, isopropyl alcohol, and isopropyl mercaptan, and a mass of the molecular modifier is 2 wt% to 10 wt% of a total mass of the sodium itaconate, the monoethyl itaconate, and the diethyl itaconate.

Further, in the step (2), an initiator of the initiator solution is one or two selected from a group consisting of ammonium persulfate and potassium persulfate, and a mass of the initiator is 1 wt% to 20 wt% of a total mass of the itaconic acid, the monoethyl itaconate, and the diethyl itaconate.

Further, in the step (3), the inert gas is nitrogen or argon.

Further, in the step (4), the stirring is conducted at a stirring rate of 300 rpm to 1,000 rpm, the initiator solution is added dropwise for 1 h to 3 h, and the high-temperature reaction is conducted for 0.5 h to 6 h at 60°C to 100°C.

Further, in the step (5), a volume ratio of the absolute ethanol to the polymer solution is 1:6.

Further, in the step (6), the vacuum drying is conducted at 80°C for 24 h.

The present disclosure further provides a bio-based terpolymer prepared by the synthesis method.

The present disclosure further provides a use of the bio-based terpolymer in preparation of a dishwashing powder.

The present disclosure further provides a use of the bio-based terpolymer in resistance to hard water and inhibition on or removal of a limescale.

In an exemplary example, a synthetic route of the bio-based terpolymer in the present disclosure is as follows:

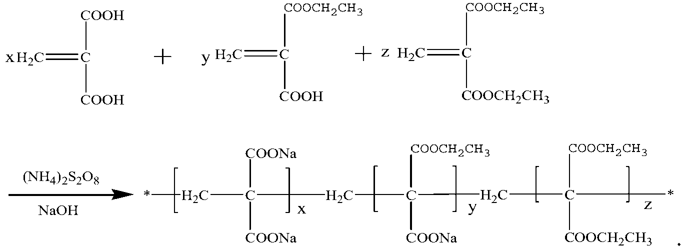

The technical solutions in the examples of the present disclosure are clearly and completely described below with reference to the specific examples and accompanying drawings in the examples of the present disclosure. Apparently, the described examples are merely some rather than all of the examples of the present disclosure. All other examples obtained by those of ordinary skill in the art based on the examples of the present disclosure without creative efforts shall fall within the protection scope of the present disclosure.

In the description of the present disclosure, it should be noted that orientation or position relationships indicated by terms such as "upper", "lower", "inner", "outer", "front end", "rear end", "both ends", "one end", and "the other end" are described based on the orientation or position relationships shown in the accompanying drawings. These terms are merely intended to facilitate and simplify the description of the present disclosure, rather than to indicate or imply that the mentioned device or component must have a specific orientation or must be constructed and operated in a specific orientation. Therefore, these terms should not be understood as a limitation to the present disclosure. Moreover, terms such as "first" and "second" are merely intended for the purpose of description, and should not be construed as indicating or implying relative importance.

In the description of the present disclosure, it should be noted that, unless otherwise clearly specified and limited, meanings of terms such as "arranged", "provided with", and "connected with" should be understood in a board sense. For example, the "connection" may be a fixed connection, a removable connection, or an integral connection; may be a mechanical connection or an electrical connection; may be a direct connection or an indirect connection through an intermediate medium; or may be intercommunication between two components. Those of ordinary skill in the art may understand specific meanings of the above terms in the present disclosure based on a specific situation.

If no specific conditions are specified in the examples, the examples will be implemented under conventional conditions or the conditions recommended by a manufacturer. All of the used reagents or instruments which are not specified with manufacturers are conventional commercially-available products.

### Example 1 Synthesis of a bio-based terpolymer

15 g of itaconic acid, 30 g of monoethyl itaconate, 20 g of diethyl itaconate, 3 g of isopropyl alcohol as a molecular modifier, and 150 mL of distilled water were added to a three-neck flask with a reflux condenser tube, and fully stirred at room temperature to produce a mixed solution. 5 g of ammonium persulfate was dissolved in 80 mL of distilled water to produce an ammonium persulfate solution, and the ammonium persulfate solution was added to a constant-pressure dropping funnel. In a nitrogen atmosphere, the ammonium persulfate solution was slowly added dropwise to the mixed solution, and a reaction was conducted at a constant temperature of 70°C for 4 h to produce a reaction solution. A pH of the reaction solution was adjusted with a 50% alkali liquor to about 7, and alcohol precipitation and washing were conducted with 2,000 mL of absolute ethanol to produce a precipitation product. The precipitation product was dried in a vacuum drying oven at 50°C for 48 h to produce the bio-based terpolymer, with a yield of 90.50%.

### Example 2 Synthesis of a bio-based terpolymer

30 g of itaconic acid, 15 g of monoethyl itaconate, 20 g of diethyl itaconate, 3 g of isopropyl alcohol as a molecular modifier, and 150 mL of distilled water were added to a three-neck flask with a reflux condenser tube, and fully stirred at room temperature to produce a mixed solution. 5 g of ammonium persulfate was dissolved in 80 mL of distilled water to produce an ammonium persulfate solution, and the ammonium persulfate solution was added to a constant-pressure dropping funnel. In a nitrogen atmosphere, the ammonium persulfate solution was slowly added dropwise to the mixed solution, and a reaction was conducted at a constant temperature of 70°C for 4 h to produce a reaction solution. A pH of the reaction solution was adjusted with a 50% alkali liquor to about 7, and alcohol precipitation and washing were conducted with 2,000 mL of absolute ethanol to produce a precipitation product. The precipitation product was dried in a vacuum drying oven at 50°C for 48 h to produce the bio-based terpolymer, with a yield of 80.65%.

### Example 3 Synthesis of a bio-based terpolymer

10 g of itaconic acid, 30 g of monoethyl itaconate, 20 g of diethyl itaconate, 3 g of isopropyl alcohol as a molecular modifier, and 150 mL of distilled water were added to a three-neck flask with a reflux condenser tube, and fully stirred at room temperature to produce a mixed solution. 5 g of ammonium persulfate was dissolved in 80 mL of distilled water to produce an ammonium persulfate solution, and the ammonium persulfate solution was added to a constant-pressure dropping funnel. In a nitrogen atmosphere, the ammonium persulfate solution was slowly added dropwise to the mixed solution, and a reaction was conducted at a constant temperature of 70°C for 4 h to produce a reaction solution. A pH of the reaction solution was adjusted with a 50% alkali liquor to about 7, and alcohol precipitation and washing were conducted with 2,000 mL of absolute ethanol to produce a precipitation product. The precipitation product was dried in a vacuum drying oven at 50°C for 48 h to produce the bio-based terpolymer, with a yield of 96.87%.

### Example 4 Synthesis of a bio-based terpolymer

10 g of itaconic acid, 30 g of monoethyl itaconate, 20 g of diethyl itaconate, 3 g of isopropyl alcohol as a molecular modifier, and 150 mL of distilled water were added to a three-neck flask with a reflux condenser tube, and fully stirred at room temperature to produce a mixed solution. 6 g of ammonium persulfate was dissolved in 80 mL of distilled water to produce an ammonium persulfate solution, and the ammonium persulfate solution was added to a constant-pressure dropping funnel. In a nitrogen atmosphere, the ammonium persulfate solution was slowly added dropwise to the mixed solution, and a reaction was conducted at a constant temperature of 70°C for 4 h to produce a reaction solution. A pH of the reaction solution was adjusted with a 50% alkali liquor to about 7, and alcohol precipitation and washing were conducted with 2,000 mL of absolute ethanol to produce a precipitation product. The precipitation product was dried in a vacuum drying oven at 50°C for 48 h to produce the bio-based terpolymer, with a yield of 97.5%.

### Example 5 Characterization for the bio-based terpolymer

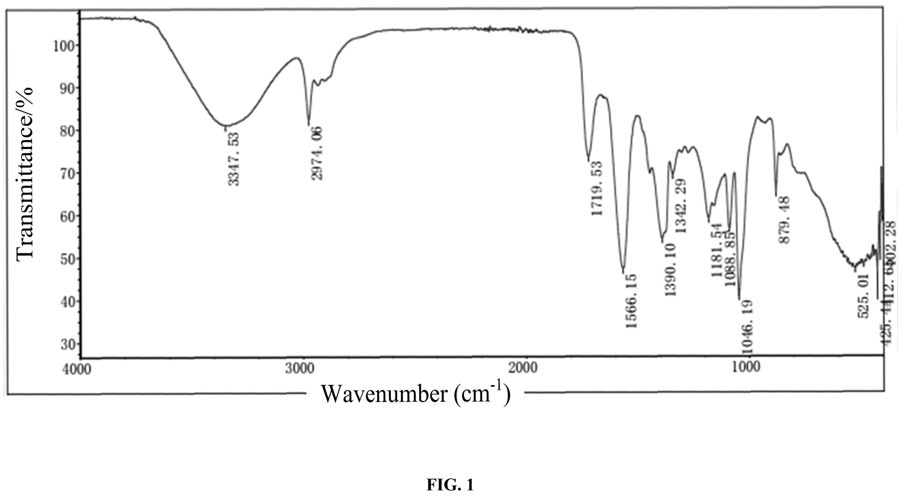

The bio-based terpolymer synthesized in Example 4 was tested by infrared spectroscopy. As shown in FIG. 1, the bio-based terpolymer includes the following characteristic peaks: a broad peak at 3,347 cm⁻¹, which is attributed to the stretching of -OH in a carboxyl group of the polymer; absorption peaks at 1,719 cm⁻¹ and 1,566 cm⁻¹, which are absorption peaks of an ester group and a carbonyl group in an ethyl ester of the polymer; and peaks at 1,046 cm⁻¹ and 1,088 cm⁻¹, which are the stretching and absorption peaks of C-O. It is proved that the bio-based terpolymer has been successfully prepared.

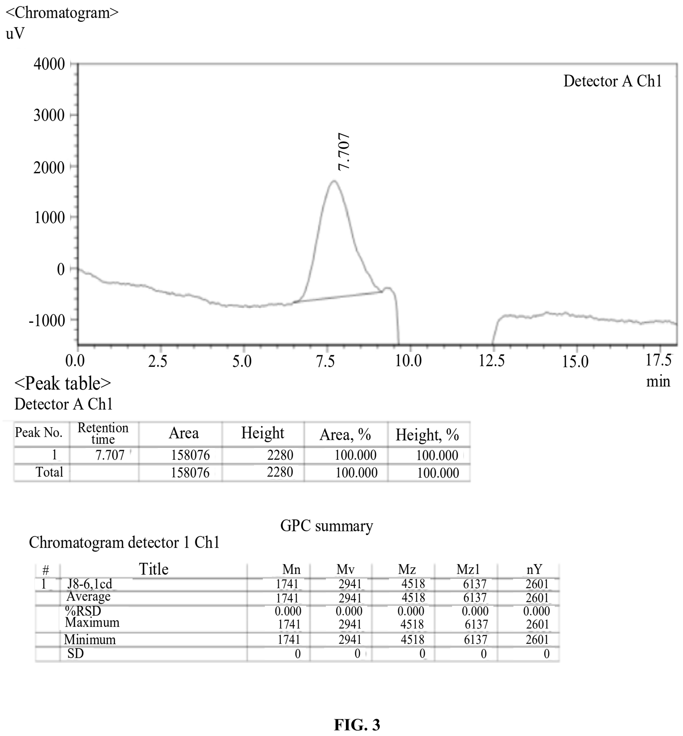

The bio-based terpolymer synthesized in Example 4 was analyzed by gel permeation chromatography. As shown in FIG. 3, the bio-based terpolymer has a weight-average molecular weight of 2,941, a number-average molecular weight of 1,741, a weight-average molecular weight/number-average molecular weight ratio of 1.68 that is less than 2, and a narrow molecular weight distribution. Generally, the optimal molecular weight range for dispersants is 1,000 Da to 100,000 Da.

### Example 6 Thermal stability of the bio-based terpolymer

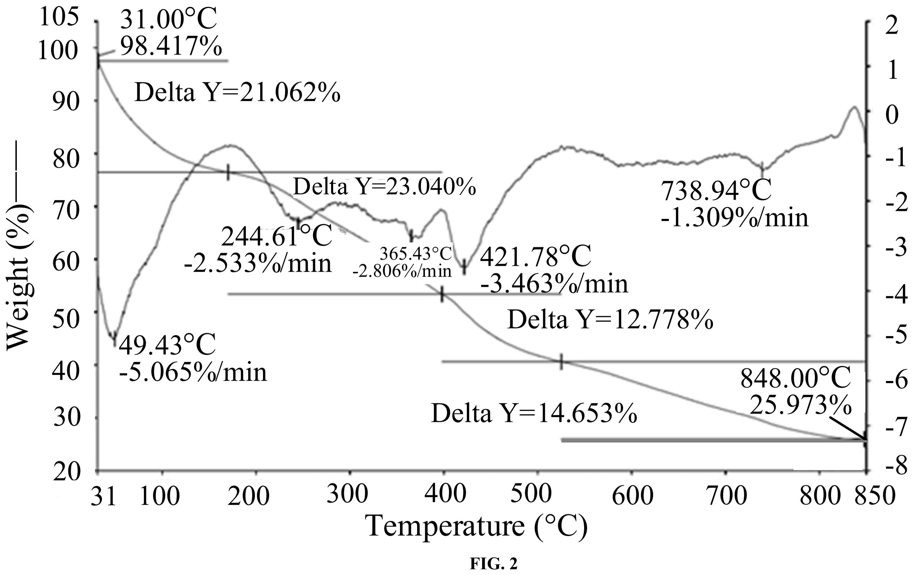

Thermogravimetric analysis was conducted on the bio-based terpolymer synthesized in Example 4. As shown in FIG. 2, even at 500°C to 550°C, the bio-based terpolymer still has a mass residue of more than 40%, indicating that the bio-based terpolymer prepared has prominent thermal stability.

### Example 7 Water solubility test of the bio-based terpolymer

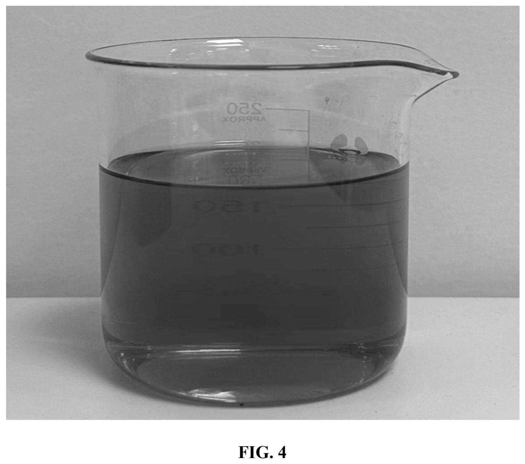

80 g of the bio-based terpolymer synthesized in Example 4 and 120 mL of distilled water were added to a 250 mL beaker, stirred for 15 min at room temperature and a stirring rate of 400 rpm, then allowed to stand for 20 min, and then observed under natural light. As shown in FIG. 4, a solution in the beaker is yellow and clear, and does not include suspended crystal particles, indicating that the bio-based terpolymer synthesized has excellent water solubility.

Example 9 Dishwashing powder formula including a bio-based terpolymer, namely, the polymer obtained in Example 4

| | |
|---|---|
| Sodium citrate | 30 g |
| Sodium carbonate | 25 g |
| Sodium percarbonate | 15 g |

| | |
|---|---|
| Tetraacetylethylenediamine (TAED) | 4 g |
| Non-ionic low-foaming surfactant | 4 g |
| Sodium sulfate | 15 g |
| Bio-based terpolymer, homemade | 5 g |
| Alkaline protease | 1 g |
| Amylase | 1 g |

Washing mode: light-load mode (1 H 10 min);
washing device: Siemens IQ300;
water hardness: 300 ppm (calcium ions : magnesium ions = 2:1);
number of washing times: 5;
detergent formula: a dishwashing powder formula including the homemade bio-based terpolymer herein;
dirt: margarine, milk powder, and egg yolk;
dirt amount: 2.5 g; and
control polymer: commercially-available PAA with a molecular weight of about 4,500.

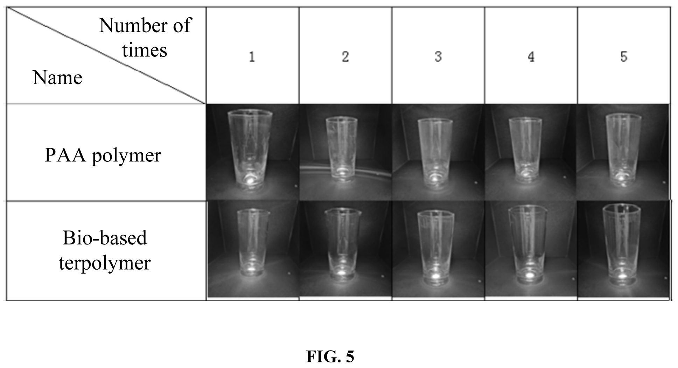

As shown in FIG. 5, it was observed in a dark box that a glass cup after 5 rounds of washing was transparent and bright, and did not have dirt, water stains, spots, or film marks. In the dishwashing experiment, the self-developed bio-based terpolymer exhibited a better washing effect than the commercially-available PAA polymer. The self-developed bio-based terpolymer has obvious advantages in the warewashing by dishwashers. As an eco-friendly and 100% bio-based polymer, the terpolymer has a promising prospect in the dishwasher detergent market.

The present disclosure provides a novel bio-based terpolymer and a preparation method and use thereof. The novel bio-based terpolymer includes itaconic acid, monoethyl itaconate, and diethyl itaconate units. Through the above-mentioned monomers, the bio-based terpolymer with a medium molecular weight and excellent performance is synthesized under optimized synthetic conditions in the presence of substances such as a molecular modifier. Moreover, the bio-based terpolymer is used in dishwashing liquids, dishwasher pods, laundry powders, laundry liquids, etc. The terpolymer provided by the present disclosure has a remarkable effect in the resistance to hard water and the inhibition of various limescales. It is observed that a glass cup washed by a dishwashing powder prepared with the terpolymer of the present disclosure is transparent and bright, and does not have dirt, water stains, spots, or film marks.

Any not described in detail in the present disclosure may be a technology well known by those skilled in the art.

Finally, it should be noted that the above specific examples are only intended to explain rather than limit the technical solutions of the present disclosure. Although the present disclosure is described in detail with reference to examples, those of ordinary skill in the art should understand that modifications and equivalent substitutions may be made to the technical solutions of the present disclosure without departing from the spirit and scope of the technical solutions of the present disclosure, and such modifications or equivalent substitutions should be included within the scope of the claims of the present disclosure.

## Claims

1. A bio-based terpolymer, **characterized in that** the bio-based terpolymer has a structure as follows: 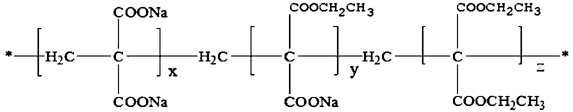 wherein x : y : z = (1-2):(1-6):(1-3); and the bio-based terpolymer has a molecular weight of 500 Da to 5,000 Da.

2. A preparation method of a bio-based terpolymer, **characterized by** comprising:
S1, adding itaconic acid, monoethyl itaconate, and diethyl itaconate as synthetic raw materials, and a molecular modifier to water, and fully stirring for dissolution to produce a mixed solution;
S2, preparing an initiator solution;
S3, slowly adding the initiator solution dropwise to the mixed solution obtained in the S1, and allowing a reaction under heating to produce a polymer solution;
S4, precipitating and washing the polymer solution to produce a precipitation product; and
S5, drying the precipitation product to produce a powdered terpolymer of poly(sodium itaconate-monoethyl itaconate-diethyl itaconate).

3. The preparation method of the bio-based terpolymer according to claim 2, **characterized in that** the itaconic acid, the monoethyl itaconate, and the diethyl itaconate as the synthetic raw materials are in a mass ratio of (1-2):(1-6):(1-3).

4. The preparation method of the bio-based terpolymer according to claim 2, **characterized in that** the molecular modifier is one or two selected from a group consisting of sodium hypophosphite, isopropyl alcohol, and isopropyl mercaptan, and a mass of the molecular modifier is 2 wt% to 10 wt% of a total mass of the itaconic acid, the monoethyl itaconate, and the diethyl itaconate as the synthetic raw materials.

5. The preparation method of the bio-based terpolymer according to claim 2, **characterized in that** an initiator of the initiator solution is one or two selected from a group consisting of ammonium persulfate and potassium persulfate, and a mass of the initiator is 1 wt% to 20 wt% of a total mass of the itaconic acid, the monoethyl itaconate, and the diethyl itaconate as the synthetic raw materials.

6. The preparation method of the bio-based terpolymer according to claim 2, **characterized in that** the reaction is conducted in an inert atmosphere.

7. The preparation method of the bio-based terpolymer according to claim 2, **characterized in that** in the S3, the reaction is conducted at 60°C to 100°C for 0.5 h to 6 h.

8. The preparation method of the bio-based terpolymer according to claim 2, **characterized in that** in the S4, the precipitating is conducted as follows: adding absolute ethanol to the polymer solution, wherein a volume ratio of the absolute ethanol to the polymer solution is 1:6.

9. The preparation method of the bio-based terpolymer according to claim 2, **characterized in that** in the S5, the drying is vacuum drying, and the vacuum drying is conducted at 80°C for 24 h.

10. A dishwasher detergent, **characterized by** comprising the bio-based terpolymer according to claim 1 or a bio-based terpolymer prepared by the preparation method according to any one of claims 2 to 9.

11. A use of the bio-based terpolymer according to claim 1 or a bio-based terpolymer prepared by the preparation method according to any one of claims 2 to 9 in preparation of a dishwasher detergent.
